# EUROPEAN PATENT APPLICATION

(11) **EP 2 284 237 A1**
(43) Date of publication of application: **16.02.2011**
(21) Application number: 10169621.9
(22) Date of filing: 15.07.2010
(51) Int. Cl.: C09J 7/02, G09F 3/10

(54) **Wash-off labels**

(30) Priority: 05.08.2009 EP 09290614
(71) Applicant: Rohm and Haas Company, Philadelphia, Pennsylvania 19106-2399 (US)
(72) Inventor: Caylus, Jean-Yves, F-06740, Paris (FR)
(74) Representative: Buckley, Guy Julian

(57) **Abstract**

This invention relates to wash-off labels comprising a filmic layer and at least one pressure sensitive adhesive layer, wherein the film layer is quickly released from a glass or plastic substrate under appropriate conditions.

## Description

The present invention relates to wash-off labels that are formed from a filmic substrate and a pressure sensitive adhesive (PSA) layer where the adhesive comprises 1 x 10 to 5 x 10⁻⁴ equivalents of hydrazide functionality per gram of dry adhesive of a hydrazide compound.

In the recycling of packaging materials, particularly glass bottles and other containers, it is necessary to remove ancillary materials on the objects before they are processed for recycling. In particular it is necessary to remove the labels from glass and plastic bottles and other containers before the glass or plastic material enters the recycling process. In keeping with ecologically favorable goals, it is desirable that the adhesives used be water-based systems to avoid the issues related to organic solvents, and that the process of label removal not itself involve excessive energy consumption or the use or generation of hazardous or polluting chemicals. At the same time, it is necessary that the adhesive be suitable to effectively adhere the label material to the container under normal conditions of use, including immersion in cold water, exposure to cold and heat, and exposure to humid conditions.

WO08/057926 discloses a removable acrylic emulsion PSA in which the acrylic polymer is neutralized to a pH of greater than 4.5 with at least one hydroxy functional amine. The acrylic polymer may be formed with multifunctional crosslinking monomer; it also may include optional external crosslinkers. When used on a paper or polymeric film label, the PSA is said to be removable when the label is washed in aqueous caustic solution at a temperature of 50°C or greater. WO08/1057926 attempts to solve problems associated with wash-off labels, but it requires the presence of hydroxy functional amine.

The present invention provides a composite useful as a wash-off label formed from a filmic layer and at least one PSA layer formed by drying an aqueous polymer dispersion, said polymer comprising polymerized residues of alpha, beta- (α,β-) ethylenically unsaturated monomers, wherein the aqueous polymer dispersion further comprises 1 x 10⁻⁶ to 5 x 10⁻⁴ equivalents of hydrazide functionality per gram of dry adhesive of a hydrazide compound comprising at least one hydrazide group, wherein the label releases from a glass substrate in 2 minutes or less when soaked in water at pH of 13 and 80°C. The composite of the present invention exhibits excellent retention of PSA properties under challenging use conditions, such as immersion in cold water and even ice water, extended exposure to cold and hot temperatures, and exposure to high humidity, while remaining quickly removable under moderate wash conditions.

As used herein, the use of the term "(meth)" followed by another term such as acrylate refers to both acrylates and methacrylates. For example, the term "(meth)acrylate" refers to either acrylate or methacrylate; the term "(meth)acrylic" refers to either acrylic or methacrylic; the term "(meth)acrylonitrile" refers to either acrylonitrile or methacrylonitrile; and the term "(meth)acrylamide" refers to either acrylamide or methacrylamide.

"Glass transition temperature" or "T_{g}" as used herein, means the temperature at or above which a glassy polymer will undergo segmental motion of the polymer chain. Glass transition temperatures of a polymer can be estimated by the Fox equation, as is well known, and is described in Bulletin of the American Physical Society, 1, 3, p.123 (1956), and, for example, in published U.S. patent application US2008/0176996.

All of the numeric ranges described herein are inclusive and separably combinable.

The wash-off label of the present invention is formed from at least one filmic layer, and at least one PSA layer formed by drying an aqueous polymer dispersion, said polymer comprising polymerized residues of alpha-beta (α-β) ethylenically unsaturated monomers, wherein the aqueous polymer dispersion further comprises 1 x 10⁻⁶ to 5 x 10⁻⁴ equivalents of hydrazide functionality per gram of dry adhesive of a hydrazide compound comprising at least one hydrazide group.

The filmic layer used to form the wash-off label may comprise a single layer of filmic material, or may be formed of a multi-layer construction. The properties of the materials used to form the filmic layer and the intended use and desired performance properties of the label may determine the selection of the appropriate materials and construction for use as the filmic layer. In the case of multi-layer films, the important consideration is nature of the outer layer which is in contact with the PSA layer. In labels comprising simple, single-layer filmic layers, the film layer should not be formed from standard grades of polyethylene, polypropylene or polyester films, which demonstrate less than 10% shrinkage in either the transverse or longitudinal direction when heated to 80°C. These materials may be used as the PSA contacting layer or other layer of a multi-layer film, if another layer is selected which promotes detachment, such as a stressed filmic layer. In multi-layer films, it may be advantageous for one or more of the layers that are not the layer in contact with the PSA, to be stressed films, such as monoaxially or biaxially stretched polyvinyl chloride or other stretchable films, which will curl and aid in pulling the label away from the glass or plastic substrate when subjected to suitable wash-off conditions.

A wide variety of materials may be used to form the filmic layer, including paper and polymeric compositions. The material may be primed or unprimed. It may be surface treated by, for example, corona discharge, flame, plasma, etc, to provide the surfaces with desirable properties such as improved adhesion to subsequently applied layers. Procedures for corona treating and flame treating of polymeric films are well known to those skilled in the art.

The filmic layer may be a monolayer film or a multilayer film. The multilayer film may comprise from two to ten or more layers. The filmic layer may be oriented or not oriented. It may be transparent or opaque. Opaque facestocks generally comprise a polymer as described below and one or more pigments to provide the material, or one layer of a multilayer film, with the desired color. Pigments useful for this purpose are well known in the art. For example, white films can be prepared by introducing titanium dioxide or other white pigments into the polymer. Carbon black may be used to provide a gray or black film.

Polymers suitable for use in preparing the filmic layer(s), may include, for example, polymers and copolymers of one or more of the following: polyolefin, polyacrylate, polystyrene, polyamide, polyvinyl alcohol, poly(alkylene acrylate), poly(ethylene vinyl alcohol), poly(alkylene vinyl acetate), polyurethane, polyacrylonitrile, polyester, polyester copolymer, fluoropolymer, polysulfone, polycarbonate, styrene-maleic anhydride copolymer, styrene-acrylonitrile copolymer, ionomers based on sodium or zinc salts of ethylene methacrylic acid, polyacrylonitrile, alkylene-vinyl acetate copolymer, or so-called "biopolymers", or mixtures of two or more of the foregoing. The filmic layer may comprise polyamide film, such as polyamide 6, polyamide 11 and polyamide 12.

The biopolymers which may be used to form the label of the present invention may be obtained from a biological source and may be selected from carbohydrates; polysaccharides (such as starch, cellulose, glycogen, hemi-cellulose, chitin, fructan inulin; lignin and/or pectic substances); gums; proteins, optionally cereal, vegetable and/or animal proteins (such as gluten (e.g. from wheat), whey protein, and/or gelatin); colloids (such as hydro-colloids, for example natural hydrocolloids, e.g. gums); other polyorganic acids (such as polylactic acid and/or polygalactic acid) effective mixtures thereof; and/or effective modified derivatives thereof.

In some embodiments, the biopolymer films are those formed from a biopolymer selected from cellulose, cellulose derivatives (such as cellulose acetate) or polylactic acid. Filmic layer(s) may be based on films comprising cellulose which is substantially continuous, preferably nonwoven and/or entangled, in structure. The filmic layer of the invention may comprise non-microbial cellulose such as cellulose regenerated from a cellulosic dispersion in a non-solvating fluid (such as, but not limited to, N-methylmorpholine-N-oxide (NMMO) and mixtures of LiCl and dimethyl phthalate (DMP)). One specific example is "viscose" which is sodium cellulose xanthate in caustic soda. Cellulose from a dispersion can be cast into film by regenerating the cellulose in situ by a suitable treatment (e.g., addition of suitable reagent which for viscose can be dilute sulphuric acid) and optionally extruding the cellulose thus formed. Such cellulose is known herein as regenerated cellulose and preferred films of the present invention comprise regenerated cellulose. Conveniently films of the present invention substantially comprise cellulose from a wood source, most preferably at least 90% of the cellulosic material is from a wood source. One suitable cellulose based film is NatureFlex™ regenerated cellulose film (Innovia Films).

In some embodiments of the invention, the plastic film of the filmic layer is unstressed (i.e., not stretched), while in others it may be stretched in at least one direction. In a multilayer film, only one, or less than all, of the layers may be monoaxially or biaxially stretched. In the case of multilayer films in which more than one layer is stretched, the layers may all be stretched in essentially the same orientation, or different layers may be stretched in different orientations relative to each other.

It is possible to use a shrinkably-stretched film for only one (or less than all) of the layers in a multilayer film, in particular the lowermost film layer (i.e., the layer closest to the adhesive layer), and for one or more of the other layers to use a non-shrinking film, i.e. a thermally fixed, dimensionally stable film. The film layers can also be bonded to one another by means of lamination adhesive, i.e. a one or two-component lamination adhesive such as a polyurethane-based adhesive, and pressure-sensitive adhesives or else thermally activatable adhesives. Examples of shrinkably-stretched polymers include monoaxially or biaxially stretched polyethylene terephthalate (PET) film, polyethylene terephthalate glycol (PETG) film, and polyvinyl chloride (PVC) film.

In certain embodiments of the invention, the filmic layer, or at least the layer of a multilayer film bearing the adhesive layer may be treated before application of the adhesive layer, for example by corona treatment, flame pretreatment, plasma pretreatment or chemical grafting, or with the aid of an adhesion-promoting intermediate layer containing, for example, chlorinated polyolefins, chlorinated rubber, ethylene/vinyl acetate (EVA) copolymer, chlorinated polypropylene or polymerized ethylene/acrylamide comonomers.

The wash-off label comprises at least one pressure sensitive adhesive layer formed by drying an aqueous polymer dispersion. The polymer of that dispersion comprises polymerized residues of α, β-ethylenically unsaturated monomers. The PSA also comprises 1 x 10⁻⁶ to 5 x 10⁻⁴ equivalents of hydrazide functionality per gram of dry adhesive of a hydrazide compound comprising at least one hydrazide group, and may further comprise other common or useful components, including without limitation, one or more tackifiers, plasticizers, surfactants (including as separate components or as polymerized residues of polymerizable surfactant monomers), initiators, chain transfer agents, multi-valent metal ion salts, defoamers, thickeners, rheology modifiers, pigments, waxes, fillers and wetting agents. When wax is incorporated in the PSA, it may be in the form of an aqueous dispersion of the wax.

In one embodiment, the label may comprise two or more layers of PSA on the same surface of the filmic layer, wherein the layer of PSA which will contact the substrate to be adhered to (i.e., the glass or plastic container) is PSA comprising 1 x 10⁻⁶ to 5 x 10⁻⁴ equivalents of hydrazide functionality per gram of dry adhesive of a hydrazide compound comprising at least one hydrazide group. The other layer(s) of PSA between such an outer layer of PSA and the filmic later may be of similar composition to the other layer, or it (or they) may be formed without hydrazide and may be selected for other desirable properties. When multiple layers of PSA are employed, they may be coated on to the filmic layer by any suitable means known in the art, including, for example, by curtain coating operations.

The preparation of aqueous dispersions of water-insoluble latex polymers by emulsion polymerization is well known in the art. The practice of emulsion polymerization is discussed in detail in D. C. Blackley, Emulsion Polymerization (Wiley, 1975), and in H. Warson, The Applications of Synthetic Resin Emulsions, Chapter 2 (Ernest Benn Ltd., London 1972). Polymerization methods and useful polymerization aids, such as dispersing agents, initiators, chain transfer agents, and the like are well known, and are described, for example, in published U.S. patent application US2008/0176996.

The α, β-ethylenically unsaturated monomers used in preparing the aqueous polymer dispersion may be any of those conventionally used in the synthetic resin emulsion art. Acrylic monomers are preferred for preparing latex polymer to be used as pressure sensitive adhesive compositions. Examples of acrylic monomers include the (C₁-C₂₄) alkyl esters of (meth)acrylic acids. Examples of (C₁-C₂₄) alkyl groups of esters of (meth)acrylic acids which may be used in forming the polymer used in the invention include: methyl, propyl, isopropyl, butyl, isobutyl, sec-butyl, t-butyl, amyl, isoamyl, t-amyl, hexyl, cyclohexyl, 2-ethylhexyl, octyl, decyl, lauryl, myristyl, cetyl, stearyl groups and the like. Specific examples include: methyl methacrylate, ethyl acrylate, or n-butyl acrylate, 2-ethylhexyl acrylate, lauryl methacrylate, isodecyl methacrylate, methyl acrylate, ethyl methacrylate, sec-butyl acrylate and t-butyl methacrylate. The (C₁-C₁₂) alkyl esters of (meth)acrylic acid are preferred in preparing the instant latex polymer.

Other monoethylenically unsaturated polymerizable monomers useful in minor proportion (i.e., less than 5% by weight of the total monomer composition) as comonomers with acrylic monomers in preparing the aqueous polymer dispersion include the vinylidiene halides, vinyl halides, acrylonitrile, methacrylonitrile, vinyl esters such as vinyl formate, vinyl acetate and vinyl proprionate, and mixtures of ethylene and such vinyl esters, (meth)acrylic acid esters of alcohol ethers such as diethylene glycol monoethyl or monobutyl ether methacrylate, (C₁-C₁₀) alkyl esters of beta-acryloxypropionic acid and higher oligomers of acrylic acid, styrene and alkyl substituted styrenes and vinyl aromatics including alpha-methyl styrene, mixtures of ethylene and other alkylolefins such as propylene, butylene, pentene and the like, vinyl ethers such as methyl vinyl ether, ethyl vinyl ether, vinyl 2-methoxyethyl ether, vinyl 2-chloroethyl ether and the like.

Butyl acrylate, 2-ethyl-hexyl acrylate, iso-octyl acrylate are especially preferred monomers. In some preferred embodiments the polymer comprises from 0.25 to 5% of at least one nonionic monoethylenically unsaturated monomer having a homopolymer Tg of greater than 50°C, such as methyl methacrylate or styrene or other styrenic monomers.

Additional monoethylenically unsaturated polymerizable comonomers useful in preparing aqueous polymer dispersion include hydroxy functional vinyl monomers such as 2-hydroxyethyl methacrylate, 2-hydroxyethyl acrylate, 3-hydroxypropyl methacrylate, butanediol acrylate, 3-chloro-2-hydroxypropyl acrylate, 2-hydroxypropyl acrylate, and 2-hydroxypropyl methacrylate. Further examples of useful monomers include the partial esters of unsaturated aliphatic dicarboxylic acids and particularly the alkyl half esters of such acids. Examples of such partial esters are the alkyl half esters of itaconic acid, fumaric acid and maleic acid wherein the alkyl group contains 1 to 6 carbon atoms. Representative members of this group of compounds include methyl acid itaconic, butyl acid itaconic, ethyl acid fumarate, butyl acid fumarate, and methyl acid maleate. Minor amounts of other comonomers, such as adhesion promoting comonomers, may also be used.

Examples of α, β-ethylenically unsaturated carboxylic acids which may be copolymerized with (meth)acrylate and other monomers in forming the aqueous polymer dispersion include acrylic acid, methacrylic acid, beta-acryloxypropionic acid and higher oligomers of acrylic acid and mixtures thereof, ethacrylic acid, itaconic acid, aconitic acid, crotonic acid, citraconic acid, maleic acid, fumaric acid, alpha-chloroacrylic acid, cinnamic acid, mesaconic acid and mixtures thereof. Acrylic acid and methacrylic acid are preferred, and methacrylic acid is especially preferred. It is preferred that α, β-ethylenically unsaturated carboxylic acid comprise an amount ranging from upper limits of 10, 5 or 3.5% to lower limits of 0.1, 0.25, or 0.5% by weight based on the total weight of monomer, of the aqueous polymer dispersion.

In addition to monoethylenically unsaturated monomer, small proportions of α, β-ethylenically unsaturated monomer having at least two sites of alpha, beta-ethylenic unsaturation, that is, di- or multi-ethylenically unsaturated monomer, may be used as comonomer in preparing the first stage polymer. However, it is not necessary to employ any multi-ethylenically unsaturated monomer to form the PSA useful in the wash-off label of the present invention, and in certain preferred embodiments, the PSA is prepared with no such multi-ethylenically unsaturated monomers.

In one embodiment, the PSA may be formed in a multistage process, wherein, after preparation of the first stage polymer, one or more subsequent stages of polymerization are conducted, wherein the monomers comprise α, β-ethylenically unsaturated monomer comprising at least one monomer having at least two sites of α, β-ethylenic unsaturation, wherein said additional monomer has low water-solubility, and is dispersed in the first stage aqueous dispersion of water insoluble latex polymer. It is preferred that the additional multifunctional α, β-ethylenically unsaturated monomer comprises amounts ranging from upper limits of 10, or 7.5% to lower limits of 0.25% or 0.5% by weight based on the total weight of the first stage polymer. Multistage polymers of this type are described in published U.S. patent application nos. US2008/0176996 and US 2008/0281005.

It is preferred that the monomers used to form the aqueous polymer dispersion be selected and used in sucb proportions to form a polymer with a glass transition temperature (Tg) of less than -20°C, -30°C, or -40°C. These and other Tg values are chosen so that the formulated PSA will exhibit desirable properties for the particular intended application of the adhesive and the resulting label composite.

The aqueous polymer dispersion may be polymerized using surfactants, including conventional surfactants and polymerizable surfactants (e.g, ethylenically unsaturated surfactant monomers). The polymer may be formed as a single stage polymer, or a multi-stage polymer. When multi-stage polymers (of i number of stages) are desired, polymerizable surfactants may be used forming one or more of the first stage (stage 1), the one or more subsequent stages (stages 2 to i-1), or the final stage (stage i), including any combination thereof and all of such stages. Suitable polymerizable surfactants are described in published U.S. patent applications US2003/0149119 and US2006/0235131; examples include nonylphenoxy propenyl polyethoxylated sulphate (e.g., HITENOL™ from Daiichi Corp); sodium alkyl allyl sulphosuccinate (e.g., TREM™ LF-40 from Henkel Corp).

In one embodiment of the invention, the aqueous polymer dispersion comprises an emulsion polymer comprising (i) at least 40 wt.% of one or more monomer having a homopolymer Tg of less than -40°C; and (ii) 10 to 50 wt.% of one or more soft hydrophilic, nonionic monomer having a homopolymer Tg of less than 30°C. The emulsion polymer may further comprise 0.1 to 10 wt.% of residues of one or more α, β-ethylenically unsaturated carboxylic acid monomers. The polymers may correspond to the first stage polymers described in published U.S. patent application US2008/0176996. In some embodiments, the soft hydrophilic monomer has a homopolymer Tg of less than 30°C and water solubility of 2% or greater at 25°C (e.g., ethyl acrylate, methyl acrylate, vinyl acetate).

In another embodiment of the invention the PSA layer may comprise (i) an aqueous polymer dispersion and (ii) from lower limits of 1, 5 and 10 wt.% to upper limits of 25, 30 and 55 wt.%, based on the dry weight of the PSA, of one or more polymeric additive having a number average molecular weight less than about 35,000 and a softening point greater than about 40°C (as determined by ASTM test method #E-2867). The polymeric additive may be polymerized in the aqueous polymer dispersion, or it may be blended with or otherwise added to the aqueous polymer dispersion. Suitable polymeric additives are described in U.S. Patent 4,912,169 and in published U.S. patent application no. 2006/0142493, the latter describing polymeric additives prepared with the use of polymerizable surfactants.

In a further embodiment, the PSA layer may comprise an aqueous polymer dispersion comprising an emulsion polymer comprising (i) at least 40 wt.% of one or more monomer having a homopolymer Tg of less than -40°C; and (ii) 10 to 50 wt.% of one or more soft hydrophilic, nonionic monomer having a homopolymer Tg of less than 30°C, as described above, and further comprise polymeric additive of the type described above. This embodiment is particularly preferred when the label is to be used on polyolefin containers, such as polyethylene bottles.

To achieve the benefits of the invention, the aqueous polymer dispersion used to form the PSA must comprise from 1 x 10⁻⁶ to 5 x 10⁻⁴ equivalents of hydrazide functionality per gram of dry adhesive of a hydrazide compound comprising at least one hydrazide group. Preferably, the PSA comprises from 1 x 10⁻⁵ to 3 x 10⁻⁴, or 2.5 x 10⁻⁵ to 3 x 10⁻⁴, or 5x10⁻⁵ to 2.5x10⁻⁴ equivalents of hydrazide functionality per gram of dry adhesive of hydrazide compound comprising at least one hydrazide group. In an embodiment in which the hydrazide compound is adipic dihydrazide (ADH), for example, the ADH must be present at a level of 0.01 to 5 wt.%, preferably at levels of 0.1 to 3 wt.%, or 0.25 to 3 wt.%, or 0.5 to 2.5 wt.%, based on the weight of dry adhesive.

In a preferred embodiment of the invention, the aqueous polymer dispersion contains no carbonyl functionality, which, if present, would be capable of undergoing a condensation reaction with hydrazide functional groups, or otherwise react with such groups. However, if there is carbonyl functionality present in the aqueous polymer dispersion, then the resulting pressure sensitive adhesive should have enough free hydrazide functional groups after any reaction between such hydrazide functional groups and carbonyl groups in the aqueous polymer dispersion to meet the requirements described above. That is, the aqueous polymer dispersion comprises a quantity of hydrazide functional groups present in molar excess of from 1 x 10⁻⁶ to 5 x 10⁻⁴ equivalents of hydrazide functionality per gram of dry adhesive relative to any carbonyl functionality capable of undergoing a condensation reaction with hydrazide functional groups.

In one embodiment, the hydrazide compound contains two or more hydrazide functional groups. The hydrazide compound may be a C₂-C₁₀ dicarboxylic acid dihydrazide. Particularly suitable dihydrazides for use in the present invention are oxalic dihydrazide, malonic dihydrazide, succinic dihydrazide, glutaric dihydrazide, adipic dihydrazide, sebacic dihydrazide, maleic dihydrazide, fumaric dihydrazide, itaconic dihydrazide and isophthalic dihydrazide. Adipic dihydrazide, sebacic dihydrazide and isophthalic dihydrazide are preferred. A single type of dihydrazide compounds may be used, or a combination of one of more dihydrazides may be used.

The wash-off label is prepared by applying a coating of the PSA layer on a surface of the filmic layer. The application may be carried out by any subitable means known in the art. The loading or coating level of PSA on the film is such as to form a suitable label for application to a glass or plastic substrate, such as a glass or polyethylene bottle or other container; for example 15 to 20 g/m². The application methods and loading levels are well known to those skilled in the art.

The wash-off label of the present invention releases from a glass substrate in 2 minutes or less when soaked in water at pH of 13 and 80°C. However, when soaked in water at neutral pH and a temperature lower than 50°C, the label will remain adhered to a glass substrate for 8 hours or more. The label has a 24-hour dry peel adhesion from glass of at least 2.3 Newton/cm (N/cm) as measured by FINAT Test Method FTM1, or alternatively, at least 3 N/cm, at least 6 N/cm or at least 8 Newton/cm; and a 24-hour dry peel adhesion from polyethylene (PE) of at least 2 N/cm as measured by FINAT Test Method FTM1, or alternatively, at least 3 N/cm. The wash solution may be formed, for example, from a 1.5% to 2% solution of NaOH in water.

### EXAMPLES

As set forth in the following table, a series of labels were prepared and tested for peel adhesion and washoff characteristics. Filmic layers were coated (1) with ROBOND™ PS-8915 acrylic aqueous dispersion polymer (Rohm and Haas Company, Philadelphia, USA) pressure sensitive adhesive alone, (2) with ROBOND PS-8915 adhesive with 1 wt.% adipic dihydrazide (ADH), or (3) with ROBOND PS-8915 adhesive with 1 wt.% ADH and 1 wt.% anionic carnauba wax emulsion. In each case, the coatings contained 0.185 wt.% ACRYSOL™ RM-8W rheology modifier (Rohm and Haas Company). The added components are present at the stated weight percents based on the total weight of the PSA.

The films tested were polyethylene terephthalate (PET) film (25µ and 50µ), polypropylene (PP) film (55µ), polyethylene (PE) film (45µ), polylactide (PLA) film (40µ), acetate film (50µ), and coextruded oriented shrink film (50µ). The latter film, believed to be coextruded polyethylene terephthalate (PETG), has 75% transverse-direction (TD) shrinkage at 95°C at 30 seconds in water according to the manufacturer. The coated films were applied to glass plates and glass bottles. Multiple samples were run for each film and adhesive combination as shown in the table.

Peel adhesion was tested according to by FINAT Test Method FTM1 using glass plates.

Washoff was tested by placing the glass bottle with adhered label in water at pH of 13 at 80°C. The wash solution was prepared by using a 2% solution of NaOH in water. The time at which the film released from the glass plate was observed and recorded as shown in the table. The designations used in the table are: AF -- adhesive failure - slight adhesion; CF -- cohesive failure - some adhesion; MF - mixed failure (adhesive and cohesive failure); AFB -- adhesive failure from backing - strong adhesion; AFB* -- can be removed easily with the finger without rubbing; delam - delamination of the label from the bottle; and min, hrs, wk, are minutes, hours and week, respectively.

The data in the table show the effectiveness of the label construct when the filmic label is a film such as coextruded PET shrink film. In contrast, where the filmic layer on which the PSA layer is coated is a standard grade PP, PE or PET (i.e., with less than 10% shrinkage in either the transverse or longitudinal direction when heated to 80°C), the resulting label has poor wash-off characteristics as described above.

| **TABLE** | | **PSA** | | **+ADH** | | **+ADH + Wax** | |
|---|---|---|---|---|---|---|---|
| **50µ PETfilm** | | | | | | | |
| Peel adh. 20 min | N/cm | 3.9 | AF | 1.8 | AF | 1.6 | AF |
| Peel adh. 24 hrs | N/cm | 5.7 | AF | 3.1 | AF | 3.0 | AF |
| Peel adh. 1 wk | N/cm | 6.5 | AF | 3.9 | AF | 3.3 | AF |
| | | | | | | | |
| Wash off - label 1 | min | > 10 | CF | > 10 | AF | > 10 | AF |
| Wash off - label 2 | min | > 10 | CF | > 10 | AF | > 10 | AF |
| Wash off - label 3 | min | > 10 | 75% AFB | > 10 | AF | > 10 | AF |
| Wash off - label 4 | min | > 10 | CF | > 10 | AF | > 10 | AF |
| Wash off - label 5 | min | > 10 | CF | > 10 | AF | > 10 | AF |
| | | | | | | | |
| **25µ PETfilm** | | | | | | | |
| Peel adh. 20 min | N/cm | 2.6 | AF | 2.4 | AF | 2.0 | AF |
| Peel adh. 24 hrs | N/cm | 3.3 | AF | 3.1 | AF | 3.0 | AF |
| Peel adh. 1 wk | N/cm | 3.7 | AF | 3.3 | AF | 3.3 | AF |
| | | | | | | | |
| Wash off - label 1 | min | > 10 | CF | > 10 | 60% AFB | > 10 | MF |
| Wash off - label 2 | min | > 10 | 60% AFB | > 10 | 100%AFB | > 10 | AF |
| Wash off - label 3 | min | > 10 | 100% AFB | > 10 | AF/MF | > 10 | AF/MF |
| Wash off - label 4 | min | > 10 | 75% AFB | > 10 | AF/MF | > 10 | AF/MF |
| Wash off - label 5 | min | > 10 | 60% AFB | > 10 | AF/MF | > 10 | ½ delam /AF |
| | | | | | | | |
| **45µPEfilm** | | | | | | | |
| Peel adh. 20 min | N/cm | 1.8 | AF | 1.8 | AF | 1.6 | AF |
| Peel adh. 24 hrs | N/cm | 2.4 | AF | 2.4 | AF | 2.4 | AF |
| Peel adh. 1 wk | N/cm | 3.0 | AF | 3.0 | AF | 2.8 | AF |
| | | | | | | | |
| Wash off - label 1 | min | > 10 | 80% AFB | < 10 | AF | 2'13 | AF |
| Wash off - label 2 | min | > 10 | 100% AFB | 5'19 | AF | 5'11 | AF |
| Wash off - label 3 | min | > 10 | 90% AFB | > 10 | AF | 6'05 | AF |
| Wash off - label 4 | min | > 10 | 60% AFB | 5'00 | AF | 6'50 | AF |
| Wash off - label 5 | min | > 10 | 100% AFB | 7'24 | AF | > 10 | AF |
| | | | | | | | |
| **40µPLAfilm** | | | | | | | |
| Peel adh. 20 min | N/cm | 3.0 | AF | 3.0 | AF | 2.8 | AF |
| Peel adh. 24 hrs | N/cm | 3.9 | AF | 3.9 | AF | 4.1 | AF |
| Peel adh. 1 wk | N/cm | 4.1 | AF | 4.1 | AF | 4.1 | AF |
| | | | | | | | |
| Wash off - label 1 | min | > 10 | 90% AFB | 7'46 | AF | 9'35 | AF |
| Wash off - label 2 | min | > 10 | 60% AFB | 5'45 | AF | 1'52 | AF |
| Wash off - label 3 | min | > 10 | CF | 3'23 | AF | > 10 | MF |
| Wash off - label 4 | min | > 10 | 60% AFB | 1'46 | AF | 2'06 | AF |
| Wash off - label 5 | min | > 10 | 70% AFB | > 10 | AF | 4'00 | AF |
| **55µPPfilm** | | | | | | | |
| Peel adh. 20 min | N/cm | 1.8 | AF | 1.8 | AF | 1.6 | AF |
| Peel adh. 24 hrs | N/cm | 2.6 | AF | 2.6 | AF | 2.4 | AF |
| Peel adh. 1 wk | N/cm | 2.6 | AF | 2.6 | AF | 2.6 | AF |
| | | | | | | | |
| Wash off - label 1 | min | > 10 | CF | > 10 | AF | > 10 | AF |
| Wash off - label 2 | min | > 10 | 60% AFB | > 10 | AF | > 10 | AF |
| Wash off - label 3 | min | > 10 | CF | > 10 | AF | > 10 | AF |
| Wash off - label 4 | min | > 10 | 60% AFB | > 10 | AF | 5'00 | AF |
| Wash off - label 5 | min | > 10 | 75% AFB | > 10 | AF | > 10 | AF |
| | | | | | | | |
| **50**µ **coextruded** | **PET** | **Film+** | | | | | |
| Peel adh. 20 min | N/cm | 3.9 | AF | 3.9 | AF | 3.9 | AF |
| Peel adh. 24 hrs | N/cm | 5.7 | AF | 5.7 | AF | 5.1 | AF |
| Peel adh. 1 wk | N/cm | 6.1 | AF | 6.1 | AF | 5.3 | AF |
| | | | | | | | |
| Wash off - label 1 | min | 2'13 | AF | 1'45 | AF | 1'45 | AF |
| Wash off - label 2 | min | <4'00 | AF/AFB* | 1'41 | AF | 1'25 | AF |
| Wash off - label 3 | min | <4'00 | AF/AFB* | 1'29 | AF | 2'20 | AF |
| Wash off - label 4 | min | 4'25 | AF/AFB* | 0'50 | AF | 1'31 | AF |
| Wash off - label 5 | min | 2'26 | AF | 1'17 | AF | 2'53 | AF |
| | | | | | | | |
| **50**µ**acetate film** | | | | | | | |
| Peel adh. 20 min | N/cm | 4.3 | AF | 4.3 | AF | 4.1 | AF |
| Peel adh. 24 hrs | N/cm | 4.9 | AF | 4.9 | AF | 4.9 | AF |
| Peel adh. 1 wk | N/cm | 5.3 | AF | 5.3 | AF | 5.3 | AF |
| | | | | | | | |
| Wash off - label 1 | min | > 10 | AFB | 4'38 | AF | 8'00 | AF |
| Wash off - label 2 | min | > 10 | AFB | > 10 | + ¾ delam /AFB | 3'35 | AF |
| Wash off - label 3 | min | > 10 | AFB | > 10 | ⅓ delam /AFB | > 10 | +¾ delam /AF |
| Wash off - label 4 | min | > 10 | AFB | > 10 | ⅓ delam /AFB | 2'56 | AF |

| | | | | | | | |
|---|---|---|---|---|---|---|---|
| + PENTAPLAST™ SF-E649/15 oriented shrink film (Klöckner Pentaplast, Heiligenroth, Germany) | | | | | | | |

## Claims

1. A wash-off label comprising;
at least one filmic layer; and
at least one pressure sensitive adhesive layer formed by drying an aqueous polymer dispersion, said polymer comprising polymerized residues of α, β-ethylenically unsaturated monomers, wherein the aqueous polymer dispersion further comprises 1 x 10⁻⁶ to 5 x 10⁻⁴ equivalents of hydrazide functionality / gram of dry adhesive of a hydrazide compound comprising at least one hydrazide group;
wherein the label releases from a glass substrate in 2 minutes or less when soaked in water at pH of 13 and 80°C.

2. The label of Claim 1 wherein the hydrazide compound comprises two or more hydrazide groups per molecule.

3. The label of Claim 2 wherein the hydrazide compound is a C₂-C₁₀ dicarboxylic acid dihydrazides.

4. The label of Claim 3 wherein the hydrazide compound is selected from the group consisting of adipic acid dihydrazide, sebacic acid dihydrazide and isophthalic acid dihydrazide, and combinations thereof.

5. The label of Claim 1 wherein the aqueous polymer dispersion comprises residues of (a) at least 40% of one or more monomer having a homopolymer Tg of less than -40°C; and (b) 10 to 50% of one or more soft hydrophilic, nonionic monomer having a homopolymer Tg of less than 30°C.

6. The label of Claim 1 wherein the aqueous polymer dispersion further comprises 0.1 to 10 wt.% residues of one or more α, β-ethylenically unsaturated carboxylic acid monomer.

7. The label of Claim 1 wherein the filmic layer comprises a single layer film or a multilayer film, said single layer film or multilayer film comprising layers formed from polyolefin, polyacrylate, polystyrene, polyamide, polyvinyl alcohol, poly(alkylene acrylate), poly(ethylene vinyl alcohol), poly(alkylene vinyl acetate), polyurethane, polyacrylonitrile, polyester, polyester copolymer, fluoropolymer, polysulfone, polycarbonate, styrene-maleic anhydride copolymer, styrene-acrylonitrile copolymer, ionomers based on sodium or zinc salts of ethylene methacrylic acid, polyacrylonitrile, alkylene-vinyl acetate copolymer, or biopolymers, or mixtures of two or more of the foregoing.

8. The label of Claim 7 wherein the filmic layer comprises at least one layer formed from a biopolymer selected from the group consisting of carbohydrates, polysaccharides, starch, cellulose, glycogen, hemi-cellulose, chitin, fructan inulin lignin, pectic substances, gums, cereal protein, vegetable protein, animal proteins, gluten, whey protein, gelatin, colloids, hydro-colloids, polylactic acid, and polygalactic acid, and mixtures, blends or combinations thereof.

9. The label of Claim 1 wherein the label has a 24-hour dry peel adhesion from glass of at least 3 Newton/cm as measured by FINAT Test Method FTM1.

10. The label of Claim 1 wherein the aqueous polymer dispersion comprises a quantity of hydrazide functional compound present in molar excess of from 1 x 10⁻⁶ to 5 x 10⁻⁴ equivalents of hydrazide functionality per gram of dry adhesive relative to any carbonyl functionality capable of undergoing a condensation reaction with hydrazide functional groups.
